# EUROPÄISCHE PATENTSCHRIFT

(11) **EP 4 516 463 B1**
(45) Veröffentlichungstag und Bekanntmachung des Hinweises auf die Patenterteilung: **28.05.2025**
(21) Anmeldenummer: 23194104.8
(22) Anmeldetag: 29.08.2023
(51) Int. Cl.: B25J 9/16

(54) **BERÜHRUNGSLOSE ABSICHERUNG AN EINEM KOOPERATIONSBEREICH EINER MASCHINE**
CONTACTLESS SECURING OF A COOPERATION AREA OF A MACHINE
PROTECTION SANS CONTACT SUR UNE ZONE DE COOPÉRATION D'UNE MACHINE

(43) Veröffentlichungstag der Anmeldung: 05.03.2025
(73) Patentinhaber: SICK AG, 79183 Waldkirch (DE)
(72) Erfinder: Pokrandt, Dr. Peter, 76474 Au am Rhein (DE); Hofmann, Dr. Christoph, 79108 Freiburg (DE)

(56) Entgegenhaltungen:
- EP-A1- 3 153 885
- DE-A1- 102017 202 004
- DE-A1- 102018 102 966
- DE-A1- 102019 206 012

## Beschreibung

Die Erfindung betrifft ein Verfahren und eine Überwachungsvorrichtung zur berührungslosen Absicherung an einem Kooperationsbereich einer Maschine nach dem Oberbegriff von Anspruch 1 beziehungsweise 15.

In der berührungslosen Überwachung zur Absicherung von Gefahren, wie sie Maschinen im industriellen Umfeld darstellen, werden sehr häufig optoelektronische Sensoren mit einer Schutzfeldüberwachung eingesetzt. Ein Schutzfeld ist ein konfigurierter Teilbereich des Überwachungsbereichs, das während des Betriebs der Maschine vom Bedienpersonal nicht betreten werden darf. Wird ein unzulässiger Schutzfeldeingriff erkannt, etwa ein Bein einer Bedienperson, so wird die Maschine durch Ausgabe eines sicherheitsgerichteten Signals an einem sicheren Ausgang (OSSD, Output Signal Switching Device) in einen sicheren Zustand überführt.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe. Für derartige sichere Sensoren oder die damit umgesetzten Sicherheitsanwendungen werden Sicherheitsstufen oder Sicherheitsniveaus definiert, beispielsweise SIL1 bis SIL4 (Sicherheitslevel) oder PLA bis PLD (Performance Level).

Zu Absicherung wird die Maschine teilweise baulich versperrt, etwa mit Zäunen, und in einem verbleibenden Zugangsbereich mit Sensoren abgesichert. Eine besondere Herausforderung stellt sich, wenn im regulären Betrieb immer wieder Zugang zu der abgesicherten Maschine erforderlich ist. Beispiele sind Roboterzellen, in denen industrielle Roboter Produktions- oder Logistikschritte übernehmen, die punktuell unterstützt werden müssen. Hier geht es zum Beispiel um die Zuführung oder Abholung von Material. In der Praxis werden solche Bereiche regelmäßig immer noch mit Zäunen und Lichtgittern abgesichert. Eine Person, die den Bereich der Maschine betritt, wird erkannt und daraufhin die Maschine abgeschaltet. Nach Erledigung der unterstützenden Arbeitsschritte an der Maschine und Verlassen des Maschinenbereichs ist ein manueller Wiederanlauf erforderlich, indem beispielsweise die Person einen außerhalb des abgesicherten Bereichs angebrachten Taster betätigt. Das ist deshalb erforderlich, weil die Sensoren nicht sicher erfassen, ob sich die Person tatsächlich wieder entfernt hat. Ein Lichtgitter erkennt nur den Durchtritt selbst, kann aber nicht entscheiden, auf welcher Seite die Person sich anschließend befindet. Das Schutzfeld eines Laserscanners kann nicht immer den gesamten Bereich vor der Maschine abdecken, beispielsweise weil sonst die Maschine im Betrieb das Schutzfeld auslösen würde. Außerdem könnte die Person auf ein festes Objekt wie einen Sockel der Maschine aufsteigen und so für den Laserscanner unsichtbar werden. Es muss also herkömmlich eine Person dafür verantwortlich sein, dass die Maschine beim Wiederanlauf niemanden gefährdet.

Aus jüngerer Zeit sind Sicherheitslaserscanner und Sicherheitskameras bekannt geworden, die mehrere Schutzfelder simultan auswerten. Dabei ist die simultane Auswertung sehr rechenintensiv und nur eine begrenzte Anzahl paralleler Schutzfelder vorgesehen. Mehrere Schutzfelder lösen die geschilderten Problematiken auch nicht per se, die damit zur Verfügung gestellte Flexibilität wird in den meisten bestehenden Absicherungsanwendungen noch gar nicht genutzt und jedenfalls deren Potential noch längst nicht ausgeschöpft.

Die EP 3 470 879 A1 konfiguriert in einem Laserscanner mindestens teilweise einander überlappende Überwachungsfelder. Dadurch entstehen Überwachungssegmente, die sich voneinander dadurch unterscheiden, welche Überwachungsfelder dort überlappen. Die hardwareseitig vorgesehene Anzahl Überwachungsfelder wird so auf die Überwachungssegmente verfeinert. Somit steht effektiv eine größere Anzahl an möglichen Schutzfeldern zur Verfügung, die dadurch aber noch keineswegs automatisch intelligent konfiguriert sind.

Die EP 3 709 106 A1 schlägt ein Sicherheitssystem vor, das komplexe nicht sichere Auswertungen durch weniger komplexe sichere Auswertungen validiert. In einer Ausführungsform werden Objekte einerseits anhand von Scanpunktwolken auf nicht sichere Weise lokalisiert. Andererseits gibt es ein Raster von Schutzfeldern. Die nicht sicher ermittelte feine Position wird mit der sicheren Rasterposition validiert.

Die EP 3 153 885 A1 offenbart eine optoelektronische Schutzeinrichtung, die überwacht, welcher von mehreren Schutzbereichen durch ein Objekt verletzt wird (Schutzbereichsverletzung) und welchen Schutzbereich das Objekt verlassen hat (Schutzbereichsfreigabe). Bei einer vorbestimmten Reihenfolge von Schutzbereichsverletzungen und Schutzbereichsfreigaben wird der Anlagenbetrieb automatisch freigegeben.

In der EP 3 575 666 A1 wird eine Vorrichtung zur Absicherung eines Gefahrenbereichs einer Anlage vorgestellt, die einen an den Gefahrenbereich angepassten Schutzbereich überwacht. Es wird der Bewegungsablauf des Objekts beim Verlassen des Schutzbereichs erfasst und bei Registrieren eines gültigen Bewegungsablaufs ein Freigabesignal generiert, das den gefahrbringenden Betrieb der Anlage wieder aktiviert.

Die DE 10 2019 206012 A1 offenbart ein Verfahren und System zum Betreiben eines Roboters, bei dem der Roboter bei einem Hindernis näher als ein erster Mindestabstand verlangsamt und bei einem Hindernis näher als ein noch kleinerer zweiter Mindestabstand noch stärker verlangsamt wird. Die Bestimmung des Abstands zu dem Hindernis erfolgt mittels einer Unterteilung in Raumbereiche, in denen die Anwesenheit des Roboters beziehungsweise Hindernisses festgestellt wird.

Die EP4 431 787 A1 überwacht den Bereich vor der Maschine mit Schutzfeldern in einer unteren Lage und einer oberen Lage, um so eine sich nähernde Person von einem Fahrzeug zu unterscheiden.

Vor diesem Hintergrund ist Aufgabe der Erfindung, die Absicherung an einem Kooperationsbereich einer Maschine zu verbessern.

Diese Aufgabe wird durch ein Verfahren und eine Überwachungsvorrichtung zur berührungslosen Absicherung an einem Kooperationsbereich einer Maschine nach Anspruch 1 beziehungsweise 15 gelöst. Bei der Maschine handelt es sich vorzugsweise um mindestens einen Roboter. Als Kooperationsbereich ist ein Bereich bezeichnet, den Werker und Maschine gemeinsam nutzen, etwa um ein Werkstück oder Material in der einen oder der anderen Richtung zu übergeben, einen manuellen oder von der Maschine assistierten Montageschritt vorzunehmen und dergleichen. Allerdings darf dieser gemeinsame Zugriff nicht gleichzeitig während einer Maschinenbewegung erfolgen, da es ansonsten zu einem unerwünschten Kontakt oder Unfall kommen kann, und das zu verhindern ist Zweck der Absicherung.

Der Kooperationsbereich ist von einer ersten Seite her über einen Zugangsbereich für den Werker und von einer zweiten Seite für die Maschine von deren Arbeitsbereich aus erreichbar. Vorzugsweise liegt die erste Seite der zweiten Seite gegenüber, die Maschine befindet sich dann aus Sicht des Werkers hinter dem Kooperationsbereich. Ansonsten ist der Arbeitsbereich vorzugsweise geschlossen, d.h. über Zäune und dergleichen mechanisch gesichert, wobei es weitere insbesondere ebenfalls erfindungsgemäß abgesicherte Zugangsbereiche geben kann. Ein Beispiel ist eine abgeschlossene Roboterzelle als Arbeitsbereich.

Im Umfeld des Kooperationsbereichs werden mehrere Schutzfelder von mindestens einem optoelektronischen Sensor auf Schutzfeldeingriffe überwacht. Die Schutzfelder sind jeweils für sich konfigurierbare Teilbereiche des Erfassungsbereichs des Sensors und tragen den historisch bedingten Namen Schutzfeld, obwohl es sich in Wahrheit je nach Sensortyp um einen dreidimensionalen Raumbereich handeln kann. Mindestens zwei der Schutzfelder sind von der ersten Seite her in einer ersten Sequenz angeordnet. Ein sich dem Kooperationsbereich nähernder Werker löst also nacheinander Schutzfeldeingriffe in diesen Schutzfeldern aus. Im Gegensatz zu einem herkömmlichen Schutzfeld löst ein Schutzfeldeingriff keineswegs sofort eine Absicherung aus. Vielmehr gibt es zulässige und unzulässige Kombinationen von Schutzfeldeingriffen, und die Maschine wird nur im Falle einer unzulässigen Kombination abgesichert.

Die Erfindung geht von dem Grundgedanken aus, die werkerseitige Sequenzüberwachung um eine maschinenseitige Sequenzüberwachung zu ergänzen. Es sind also mindestens zwei der Schutzfelder von der zweiten Seite her in einer zweiten Sequenz angeordnet, so dass die sich dem Kooperationsbereich nähernde Maschine in der zweiten Sequenz nacheinander Schutzfeldeingriffe auslöst. Schon aus geometrischen Überlegungen folgt, dass die Schutzfelder der beiden Sequenzen unterschiedliche Schutzfelder sind, d.h. es sind die werkerseitigen Schutzfelder der ersten Sequenz von den maschinenseitigen Schutzfeldern der zweiten Sequenz zu unterscheiden. Die beiden Sequenzen treffen sich an dem Kooperationsbereich, hier kann ausnahmsweise ein Schutzfeld in Doppelfunktion zu beiden Sequenzen gehören. Die Auswertung auf zulässige und unzulässige Kombinationen von Schutzfeldeingriffen schließt nun die zweite Sequenz ein. Ob also eine Annäherung eines Werkers mit Weiterbetrieb der Maschine erlaubt ist oder die Maschine abgesichert werden muss, hängt vom Verhalten sowohl des Werkers als auch der Maschine ab.

Die Maschine kann prinzipiell über den Kooperationsbereich hinaus von ihrer zweiten Seite her in die erste Sequenz eingreifen, das bedeutet noch nicht per se eine unzulässige Kombination von Schutzfeldeingriffen, kann aber natürlich gezielt als unzulässige Kombination verboten werden. Umgekehrt gilt das grundsätzlich auch für den Werker und dessen Eingriffe in Schutzfelder der zweiten Sequenz. Vorzugsweise ist das aber verboten und gewährleistet so einen Hintertretschutz. Es bewährt sich insgesamt der Grundsatz, dass Werker und Maschine im Betrieb der Maschine vorteilhafterweise stets auf ihrer Seite verbleiben, auch wenn die Erfindung in der Lage wäre, unter definierten Bedingungen dennoch für Sicherheit zu sorgen.

Der mindestens eine optoelektronische Sensor ist vorzugsweise ein sicherer Sensor, der dementsprechend eine sichere Schutzfeldüberwachung leistet. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Das Verfahren ist ein computerimplementiertes Verfahren, das beispielsweise in einer Recheneinheit des optoelektronischen Sensors und/oder einer angeschlossenen Recheneinheit abläuft. Die Konfiguration der Schutzfelder geht der berührungslosen Absicherung voraus, sie erfolgt wegen der komplexen zu beachtenden Sicherheitsaspekte typischerweise manuell durch einen Sicherheitsexperten. Dabei sind aber automatische Unterstützungen möglich, wie Vorschläge für Schutzfelder und ein Konfigurationsprogramm mit graphischer Unterstützung beispielsweise ähnlich einem CAD-Programm, mit dem geometrische Objekte als Teile von Schutzfeldern in Bilder des Umfelds der Maschine eingepasst werden.

Die Erfindung hat den Vorteil, dass mit vergleichsweise einfachen Mitteln für eine kollaborative Sicherheit gesorgt werden kann. Die Schutzfelder können sogar von nur einem einzigen optoelektronischen Sensor aufgespannt werden. Um zusätzliche Perspektiven zu gewinnen oder durch Redundanz ein höheres Sicherheitsniveau zu erreichen, können bevorzugt zwei oder mehr Sensoren eingesetzt sein. Das ist in jedem Fall wesentlich weniger als eine herkömmlich oft noch erforderliche Anordnung zahlreicher Lichtgitter.

Somit werden Kosten und Bauraum eingespart, beispielsweise kann eine Roboterzelle dank der erfindungsgemäßen intelligenten Absicherung kompakter aufgebaut werden, und damit sind weitere Produktivitäts- und Kostenvorteile verbunden. Die Absicherung des Zugangs zum Kooperationsbereich kann zusätzlich als Hintertretschutz fungieren und einen automatischen Wiederanlauf unterstützen. Ein Verlangsamen oder gar Anhalten der Maschine erfolgt erst dann, wenn es wirklich notwendig ist.

Der optoelektronische Sensor ist bevorzugt ein 3D-Sensor, insbesondere eine Lichtlaufzeitkamera, wobei die Schutzfelder dreidimensionale Schutzfelder sind. Damit ergibt sich eine große Flexibilität, Schutzfelder und Sequenzen von Schutzfeldern zu konfigurieren, die das Umfeld des Kooperationsbereichs wirkungsvoll absichern. Diese Schutzfelder sind dreidimensionale Raumbereiche und ermöglichen damit eine noch lückenlosere und besser anpassbare Überwachung. Dabei wird trotz der räumlichen Ausdehnung an dem historischen Begriff Schutzfeld festgehalten. Der erste sichere optoelektronische Sensor kann alternativ ein Laserscanner sein. Die 3D-Kamera lässt sich aber einfacher in einer geeigneten Perspektive montieren, in der die passenden Schutzfelder überwacht werden können. Eine weitere Alternative ist ein FMCW-Sensor, der durch zusätzliche Bestimmung von Geschwindigkeitskomponenten sogar als noch höherdimensional als ein 3D-Sensor, damit aber insbesondere 3D-Sensor aufgefasst werden kann.

Vorzugsweise überwachen mindestens zwei optoelektronische Sensoren jeweils einen Teil der Schutzfelder, wobei mindestens ein Schutzfeld von beiden optoelektronischen Sensoren und daher mit einem erhöhten Sicherheitsniveau überwacht wird. Mit mehreren Sensoren sind zusätzliche Perspektiven, in der Summe größere Überwachungen und eine größere Anzahl überwachter Schutzfelder möglich. Besonders bevorzugt reichen dafür genau zwei Sensoren schon aus, insbesondere wenn es 3D-Kameras sind. Ein weiterer Vorteil ist die Möglichkeit einer redundanten Überwachung von Schutzfeldern in Überlappungsbereichen zweier Sensoren. Dadurch kann ein höheres Sicherheitsniveau erzielt werden. Beispielsweise können zwei Sensoren, die für sich nur ein PLc (Performance Level nach ISO TS 62998) aufweisen, in Kombination sogar PLd erreichen. Das ist auch deshalb interessant, weil es einen ungeheuren Aufwand bedeutet, ein Gerät auf ein höheres Sicherheitsniveau zu bringen und dies auch nur der Hersteller in einem aufwändigen Entwicklungsprozess leisten kann. Eine Kombination von Sensoren hingegen ist auf Seiten des Anwenders mit verfügbarer Hardware möglich.

Vorzugsweise umfasst ein Schutzfeld den Kooperationsbereich. Somit wird der zentrale Bereich, auf den bestimmungsgemäß Werker wie Maschine Zugriff haben, selbst abgesichert. Besonders bevorzugt wird dieses Schutzfeld von beiden optoelektronischen Sensoren überwacht. Dadurch wird sogar ein höheres Sicherheitsniveau erzielt, insbesondere lokal bezogen auf überlappend überwachte Bereiche. Es kann weitere Schutzfelder mit redundanter Überwachung und damit höherem Sicherheitsniveau geben, insbesondere für Schutzfelder, die unmittelbar an das Schutzfeld des Kooperationsbereichs angrenzen.

Als zulässige Kombination von Schutzfeldeingriffen wird angesehen, wenn in Schutzfelder der ersten Sequenz und/oder der zweiten Sequenz nacheinander von außen nach innen eingegriffen wird, wobei innen den Kooperationsbereich bezeichnet, dabei aber zwischen Schutzfeldern der beiden Sequenzen eine Mindestanzahl Schutzfelder ohne Schutzfeldeingriff verbleibt. Die Erwartung an einen ordnungsgemäßen Ablauf ist also, dass Werker wie Maschine sich von ihrer jeweiligen Seite an den Kooperationsbereich annähern. Soweit lässt sich eine Abfolge von Schutzfeldeingriffen auch baulich und durch die Konfiguration der Schutzfelder erzwingen. Als weitere Bedingungen ist gefordert, dass eine Mindestanzahl an Schutzfeldern ohne Schutzfeldeingriff zwischen Werker und Maschine verbleibt. Dabei geht es nicht allein um einen Mindestabstand, der damit natürlich implizit erzwungen wird. Vielmehr würde ohne die Mindestanzahl nicht mehr unterscheidbar, ob Werker und Maschine sich womöglich schon begegnen, wie im Folgenden auch noch näher ausgeführt. Die Mindestanzahl kann als Puffer freier Schutzfelder zwischen Werker und Maschine aufgefasst werden.

Vorzugsweise darf, wenn in ein Schutzfeld der ersten Sequenz eingegriffen wird, die Maschine in ein dem Schutzfeld der ersten Sequenz zugeordnetes Schutzfeld entsprechend der Mindestanzahl nicht mehr eingreifen, und die Maschine zieht sich, sofern sie bereits in das zugeordnete Schutzfeld eingreift, daraus zurück. Der Maschine sind also bei Annäherung des Werkers bestimmte Schutzfelder verboten, in die sie in Abwesenheit des Werkers eingreifen dürfte, die aber dem nun in einem Schutzfeld erkannten Werker zu nahe sind. Das führt dazu, dass die Mindestanzahl von Schutzfeldern ohne Schutzfeldeingriff zwischen Werker und Maschine weiterhin eingehalten oder wiederhergestellt wird. Das Verbot des Eingreifens in das zugeordnete Schutzfeld ist eine Anweisung an die Maschinensteuerung, ebenso das gegebenenfalls erforderliche Zurückziehen daraus. Die Maschinensteuerung selbst ist vorzugsweise nicht sicher, um hier den Aufwand für normgerechte Sicherheit zu vermeiden. Durch die Schutzfeldüberwachung wird sicher erkannt, ob die Maschinensteuerung der Anweisung Folge leistet, so dass im Fehlerfall reagiert werden kann, durch erneute Anweisungen an die Maschinensteuerung oder erforderlichenfalls eine Absicherung der Maschine. Die Festlegung, welches Schutzfeld das jeweilige zugeordnete Schutzfeld ist, wird mit der Schutzfeldkonfiguration beziehungsweise beim Einrichten der Sicherheitsanwendung von Hand festgelegt, beispielsweise in Form eines weiter unten vorgestellten Zustandsautomaten, oder es wird beispielsweise der n-te Nachbar innerhalb der Sequenzen zugeordnet, insbesondere mit n gleich der Mindestanzahl plus/minus eine Konstante.

Bei Einhaltung einer ersten Mindestanzahl, vorzugsweise der ersten Mindestanzahl gleich zwei, arbeitet die Maschine bevorzugt ohne Beschränkung ihrer Arbeitsgeschwindigkeit weiter. Der Puffer an freien Schutzfeldern ist in diesem Fall groß genug, dass noch keinerlei Gefährdung droht. Auch bei weiterer gegenseitiger Annäherung mit einem zusätzlichen Schutzfeldeingriff des Werkers oder der Maschine würde noch ein freies Schutzfeld zwischen Werker und Maschine verbleiben. Es wäre dann weiterhin unterscheidbar, wo sich Werker und Maschine befinden.

Bei Einhaltung lediglich einer zweiten Mindestanzahl kleiner der ersten Mindestanzahl, vorzugsweise der zweiten Mindestanzahl gleich eins, erhält der Werker bevorzugt eine Warnung, sich dem Kooperationsbereich nicht weiter anzunähern. Der Puffer an freien Schutzfeldern ist nun zu klein geworden, er enthält keine ausreichenden Reserven mehr. Die Maschine hat in dieser Situation wie oben erläutert vorzugsweise die Anweisung erhalten, sich aus einem Schutzfeld zurückzuziehen, um einen größeren Puffer wiederherzustellen. So lange sollte aber der Werker vorsichtig sein und sich nicht weiter annähern, um der Maschine ausreichend Zeit für den Rückzug zu geben. Die Warnung erfolgt beispielsweise in Form einer Anzeige, einer Farbe einer Lampe und/oder einem akustischen Signal. Es erfolgt aber vorzugsweise noch keine Absicherung, die Maschine kann weiterarbeiten, vorzugsweise sobald sie die erste Mindestanzahl wiederhergestellt hat.

Die Maschine wird vorzugsweise abgesichert, wenn eine Mindestanzahl nicht eingehalten wird. Hier ist, sofern es abgestaffelte Mindestanzahlen wie in den Vorabsätzen gibt, die kleinste Mindestanzahl gemeint. Insbesondere gibt es nun gar keinen Puffer mehr, die Schutzfelder, in die werkerseitig eingegriffen wird, grenzen unmittelbar an die Schutzfelder an, in die maschinenseitig eingegriffen wird. In dieser Situation ist nicht mehr unterscheidbar, ob sich Werker und Maschine noch für sich in benachbarten Schutzfeldern aufhalten oder ob sie bereits in demselben Schutzfeld in Kontakt kommen können, daher ist eine Absicherung nicht mehr vermeidbar. Absichern bedeutet eine angemessene Reaktion, die einen Unfall ausschließt. Das kann ein Verlangsamen der Maschine, ein Zurückweichen oder ein sofortiges Anhalten beziehungsweise Verbringen in einen sicheren Zustand sein. Nach der Norm ISO 10218-1 können Kategorien von Stopps unterschieden werden. Ein Stopp der Kategorie 2 erlaubt, die Stromversorgung der Maschine nicht zu unterbrechen. Nur Stopp-Kategorien 0 und 1 können als Notstopp verwendet werden. Es wird vorzugsweise immer die mildeste Form der Absicherung gewählt, die noch Sicherheit gewährleistet. Beispielsweise ist der im Folgeabsatz diskutierte automatische Wiederanlauf mit einem Stopp der Kategorie 2 möglich, nicht aber nach einem Notstopp.

Die Maschine läuft bevorzugt automatisch wieder an, sobald die Mindestanzahl wiederhergestellt ist oder in kein Schutzfeld mehr eingegriffen wird. Die Maschine nimmt ihre Arbeit von selbst wieder auf, wenn erneut ausreichend Puffer an freien Schutzfeldern zwischen Werker und Maschine vorhanden ist. Vorsichtshalber kann der automatische Wiederanlauf an die strengere Bedingung geknüpft sein, dass zwischenzeitlich sämtliche Schutzfeldeingriffe aufgehoben sind. Es ist denkbar, einen unabhängigen Hintertretschutz vorzusehen, etwa ein zusätzliches sicheres Radar oder einen weiteren optoelektronischen Sensor. Damit wird verhindert, dass sich während der Absicherung eine Person in den Arbeitsbereich begeben und diesen unbemerkt nicht wieder verlassen hat.

Für die Auswertung der Schutzfeldeingriffe und der deshalb hinsichtlich der Maschine zu treffenden Maßnahmen wird vorzugsweise ein Zustandsautomat eingesetzt, dessen Übergänge durch einen zusätzlichen Eingriff in ein Schutzfeld einer Sequenz oder das Beenden eines Eingriffs in ein Schutzfeld einer Sequenz bestimmt sind, wobei die Maßnahmen ein Wegbewegen der Maschine weg von dem Kooperationsbereich in die zweite Richtung, ein Verbot von Eingriffen in ein Schutzfeld durch die Maschine und/oder das Aufheben eines Verbots von Eingriffen in ein Schutzfeld sind. Zusätzliche Eingriffe beziehungsweise das Beenden von Eingriffen könnten ebenso als Annäherungs- und Wegbewegungen von Werker oder Maschine bezeichnet werden. Die jeweiligen Zustände sind mit Anweisungen an die Maschine und erforderlichenfalls deren Absicherung verbunden. Solche Anweisungen führen dazu, dass die Maschine durch das Verbot von Eingriffen in Schutzfelder einen größeren Abstand zum Kooperationsbereich einhält oder durch aktives Zurückziehen zunächst herstellt. Umgekehrt können solche Verbote in Zuständen aufgehoben werden, in denen der Werker ausreichend von dem Kooperationsbereich entfernt ist.

Die erste Sequenz umfasst bevorzugt von außen nach innen zum Kooperationsbereich ein erstes Schutzfeld α, ein zweites Schutzfeld β und ein drittes Schutzfeld γ, der Kooperationsbereich wird durch ein viertes Schutzfeld δ überwacht, und die zweite Sequenz umfasst von innen nach außen ausgehend von dem Kooperationsbereich ein fünftes Schutzfeld ε und ein sechstes Schutzfeld ζ. Das ist eine vorteilhafte Schutzfeldkonfiguration in einer Abwägung einer ausreichenden Absicherung und Flexibilität ohne unnötige Komplexität durch eine hohe Anzahl von Schutzfeldern.

Vorzugsweise überwachen zwei optoelektronische Sensoren fünf Schutzfelder W, A, B, C, D, nämlich der eine optoelektronische Sensor im Zugangsbereich ein äußeres erstes Schutzfeld W, ein den Bereich zwischen dem ersten Schutzfeld W und dem Kooperationsbereich schließendes zweites Schutzfeld A und ein sich daran in dem Arbeitsbereich anschließendes, den Kooperationsbereich umfassendes viertes Schutzfeld C und der andere optoelektronische Sensor im Arbeitsbereich ein äußeres fünftes Schutzfeld D und ein sich daran anschließendes, den Kooperationsbereich umfassendes und in den Zugangsbereich hineinragendes drittes Schutzfeld B. Dies ist eine vorteilhafte Konfiguration, an der zwei Sensoren beteiligt sind, die jeweils mit sehr wenigen Schutzfeldern auskommen. Das Schutzfeld W kann lediglich ein Warnfeld und noch kein Schutzfeld sein. Das ist insbesondere dann nützlich, wenn der Sensor nur eine begrenzte Anzahl Schutzfelder überwachen kann. Ein Warnfeld wird hier vorzugsweise unter dem Begriff Schutzfeld subsummiert, da es innerhalb der Sequenz die gleiche Rolle spielen kann.

Die Überwachungen der beiden Sensoren überlappen einander vorzugsweise zumindest im vierten Schutzfeld C, so dass hier ein höheres Sicherheitsniveau erreicht wird. Wenn beispielsweise jeder Sensor für sich nur nach PLc ausgelegt ist, kann im Schutzfeld C sogar PLd erreicht werden. Die Überlappung und damit das höhere Sicherheitsniveau kann sich auf weitere Schutzfelder erstrecken.

Vorzugsweise wird das erste Schutzfeld W als funktionales erstes Schutzfeld α, das zweite Schutzfeld A ohne das dritte Schutzfeld B als zweites funktionales Schutzfeld β, das dritte Schutzfeld B ohne das vierte Schutzfeld C als funktionales drittes Schutzfeld γ, ein Überlappungsbereich des dritten Schutzfeldes B mit dem vierten Schutzfeld C als funktionales viertes Schutzfeld δ, das vierte Schutzfeld C ohne das dritte Schutzfeld B als funktionales fünftes Schutzfeld ε und das fünfte Schutzfeld D ohne das vierte Schutzfeld C als sechstes Schutzfeld ζ überwacht. Funktionales Schutzfeld bedeutet, dass aus Sicht der Sicherheitsanwendung ein Schutzfeld überwacht wird, dieses Schutzfeld aber nicht unmittelbar einem für einen Sensor definierten Schutzfeld entsprechen muss. Vielmehr erfolgt die Überwachung eines funktionalen Schutzfeldes durch gemeinsame Auswertung von Eingriffen in die tatsächlich je Sensor definierten Schutzfelder. Dabei gibt es insbesondere Überlappungsbereiche ("UND"-Bedingung an die Schutzeldeingriffe) und exklusive Bereiche ("OHNE"- beziehungsweise "UND NICHT"-Bedingung an die Schutzfeldeingriffe). Effektiv werden durch solche gemeinsamen Auswertungen mehr Schutzfelder möglich als die Summe der Schutzfelder der beteiligten Sensoren, und außerdem können bestimmte Schutzfelder redundant und daher mit höherem Sicherheitsniveau überwacht werden. Die konkret angegebene Zuordnung kombiniert die beiden in den vorangehenden Absätzen erläuterten Konfigurationen. Dadurch können vorzugsweise das funktionale vierte Schutzfeld δ für den Kooperationsbereich und noch bevorzugter auch das angrenzende funktionale dritte Schutzfeld γ und/oder das angrenzende fünfte funktionale Schutzfeld ε ein höheres Sicherheitsniveau erreichen.

In der erfindungsgemäßen Überwachungsvorrichtung ist mindestens ein vorzugsweise sicherer optoelektronischer Sensor für eine Schutzfeldüberwachung vorgesehen, der einen Lichtempfänger zur Erzeugung eines Empfangssignals aus einfallendem Empfangslicht aufweist. Je nach Sensor ist das Empfangssignal beispielsweise das Signal einer Photodiode, die einen zurückkommenden Abtaststrahl empfängt, oder es sind Bilddaten eines Bildsensors verallgemeinernd als Empfangssignal bezeichnet. Eine Steuer- und Auswertungseinheit ist für die Schutzfeldüberwachung sowie die Prüfung von Schutzfeldeingriffen auf eine unzulässige Kombination zuständig. Die Steuer- und Auswertungseinheit kann in dem Sensor und/oder einer daran angeschlossenen Recheneinheit implementiert sein, insbesondere einer an den Sensor angeschlossenen Sicherheitssteuerung. Mit Sicherheitssteuerung ist eine sichere Auswertungseinheit gemeint, die in beliebiger Hardware realisiert ist, insbesondere eine Sicherheitssteuerung als für Sicherheitsanwendungen zugelassene Steuerung im engeren Sinne. Eine besonders vorteilhafte Aufgabenteilung sieht eine Schutzfeldüberwachung intern in dem Sensor und eine externe Bewertung der Schutzfeldeingriffe zum Erkennen unzulässiger Kombinationen vor. In der Überwachungsvorrichtung wird insbesondere eine der Ausführungsformen des erfindungsgemäßen Verfahrens umgesetzt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer 3D-Lichtlaufzeitkamera;
- Fig. 2: eine schematische Darstellung einer Überwachungsvorrichtung mit zwei Kameras und einer Sicherheitssteuerung;
- Fig. 3: eine schematische Darstellung einer Schutzfeldkonfiguration einer ersten Kamera;
- Fig. 4: eine schematische Darstellung einer Schutzfeldkonfiguration einer zweiten Kamera;
- Fig. 5: eine schematische Darstellung der kombinierten Schutzfeldkonfiguration beider Kameras gemäß Figur 3 und 4;
- Fig. 6: eine alternative Darstellung der Schutzfeldkonfiguration der ersten Kamera gemäß Figur 3 aus der Draufsicht;
- Fig. 7: eine alternative Darstellung der Schutzfeldkonfiguration der zweiten Kamera gemäß Figur 4 aus der Draufsicht;
- Fig. 8: eine alternative Darstellung der kombinierten Schutzfeldkonfiguration beider Kameras gemäß Figur 5 aus der Draufsicht;
- Fig. 9: eine Darstellung ähnlich Figur 8, in der die von den Kameras tatsächlich überwachten Schutzfelder durch gemeinsame Auswertung zu feiner definierten funktionalen Schutzfeldern kombiniert werden;
- Fig. 10: eine schematische Darstellung einer beispielhaften Annäherungssituation eines Werkers noch in großem Abstand zu der abzusichernden Maschine, die zugleich als ein beispielhafter Zustand eines Zustandsautomaten aufgefasst werden kann;
- Fig. 11: eine schematische Darstellung der Annäherungssituation eines Werkers nun in kleinem Abstand zu der abzusichernden Maschine, die zugleich als ein weiterer beispielhafter Zustand des Zustandsautomaten aufgefasst werden kann;
- Fig. 12: eine schematische Darstellung der Annäherungssituation eines Werkers nun ganz ohne erfassbaren Abstand zu der abzusichernden Maschine, die zugleich als ein weiterer beispielhafter Zustand des Zustandsautomaten aufgefasst werden kann; und
- Fig. 13: eine Übersichtsdarstellung des Zustandsautomaten, aus dem drei Zustände in den Figuren 10 bis 12 exemplarisch illustriert werden.

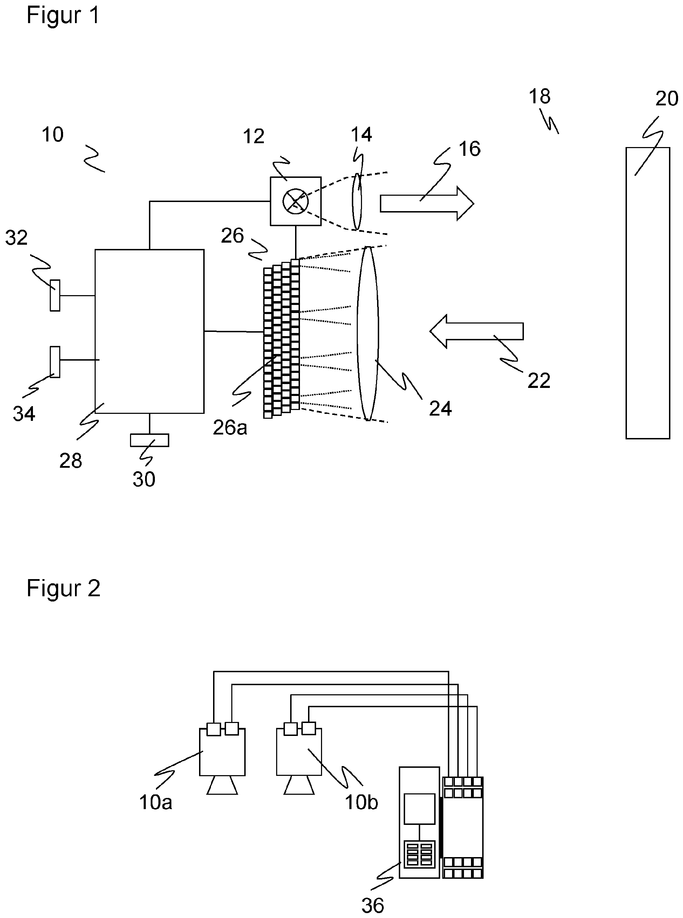

Figur 1 zeigt eine schematische Blockdarstellung einer Kamera 10, die vorzugsweise als 3D-Lichtlaufzeitkamera ausgebildet ist und die stellvertretend für einen optoelektronischen Sensor beschrieben wird, der im Zusammenhang mit der Erfindung eingesetzt werden kann. Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößem.

Trifft das Sendelicht 16 in dem Überwachungsbereich 18 auf ein Objekt oder eine Person 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen. Darin findet eine Demodulation entsprechend einem Lock-In-Verfahren statt. Durch wiederholte Erfassung mit über die Wiederholungen jeweils geringfügig versetzter Modulation des Sendelichts 16 werden mehrere Abtastwerte erzeugt, aus denen sich letztlich die Phasenverschiebung zwischen Sendelicht 16 und Empfangslicht 22 und damit die Lichtlaufzeit messen lässt. Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

In einer Steuer- und Auswertungseinheit 28 können mehrere Schutzfelder konfiguriert werden. Ein Schutzfeld ist durch geometrische Vorgaben für einen Teilbereich des Überwachungsbereichs 18 definiert, die beispielsweise in einem CAD-Programm oder auf beliebig andere Weise mittels der Steuer- und Auswertungseinheit 28 konfiguriert oder über eine Schnittstelle 30 eingespielt werden. Die Schutzfelder werden auf Objekteingriffe überwacht, und bei einem Schutzfeldeingriff wird an einem sicheren Ausgang 32, 34 ein sicheres Ausgangssignal ausgegeben. Vorzugsweise sind mehrere sichere Ausgänge 32, 34 je Schutzfeld vorgesehen, oder das Ausgangssignal codiert an einem einzigen sicheren Ausgang die jeweils von Eingriffen betroffenen Schutzfelder. Die Kamera 10 und insbesondere die Schutzfeldauswertung samt der Ausgangssignale sind vorzugsweise sicher im einleitend definierten Sinne.

Die beschriebene 3D-Kamera 10, insbesondere TOF-Kamera, ist besonders geeignet für die erfindungsgemäße Absicherung. Andere Sensoren sind aber auch möglich, insbesondere ein Sicherheitslaserscanner. Damit sind dann möglicherweise gewisse Einschränkungen beispielsweise durch Randbedingungen an die Anwendungsgeometrie hinzunehmen.

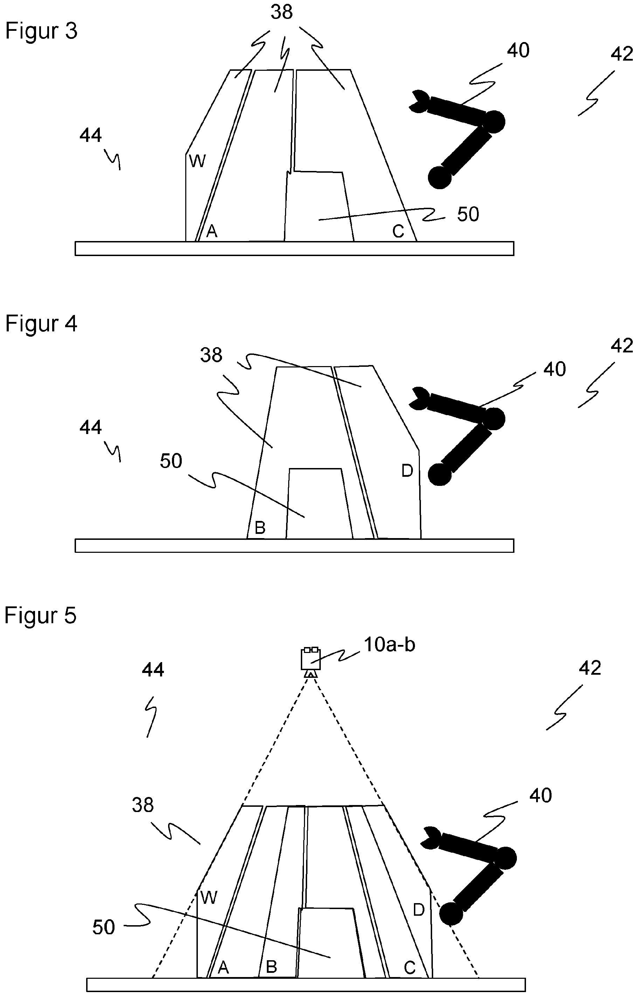

Figur 2 zeigt eine schematische Darstellung einer Überwachungsvorrichtung mit zwei Kameras 10a-b, die jeweils an eine Sicherheitssteuerung 36 angeschlossen sind. Die Kombination mehrerer Kameras 10a-b ist besonders vorteilhaft, die Erfindung kann aber auch mit nur einer Kamera 10a-b umgesetzt werden. Lediglich ein erhöhtes Sicherheitsniveau in überlappendend überwachten Schutzfeldern, auf das später noch eingegangen wird, ist mit nur einer Kamera 10a-b nicht erreichbar. Die Sicherheitssteuerung 36 ermöglicht eine übergeordnete Auswertung der Schutzfeldeingriffe, die von den einzelnen Kameras 10a-b gemeldet werden. Wird dabei eine Gefahr erkannt, so wird ein sicherheitsgerichtetes Signal an eine überwachte Maschine oder einen Roboter ausgegeben. Die Maschine oder der Roboter wird daraufhin langsamer oder weicht auf Arbeitsschritte aus, die zumindest bei dieser erkannten Objektbewegung nicht gefährden können, und nur notfalls wird die Maschine in einen sicheren Zustand überführt. Damit wird insgesamt eine hohe Verfügbarkeit und Produktivität erzielt. Die konkrete erfindungsgemäße Überwachung wird im Folgenden unter Bezugnahme auf die Figuren 3 bis 13 noch näher erläutert.

Die Verteilung der Auswertung auf interne Steuer- und Auswertungseinheiten 28 der Kameras 10a-b zur Erkennung von Schutzfeldeingriffen und zur übergeordneten Bewertung der Schutzfeldeingriffe in der Sicherheitssteuerung 36 ist besonders vorteilhaft. In der Sicherheitssteuerung reicht eine sehr einfache Logik beispielsweise in Form eines Zustandsautomaten aus, die keine hohen Hardwareansprüche stellt. Die Erfindung ist aber nicht auf eine bestimmte Zuordnung der Auswertungsfunktionalität auf bestimmte Hardwarebausteine beschränkt, sondern kann beliebig auf intern und extern verteilt werden, einschließlich der extremen Fälle, in denen in den Kameras 10a-b gar keine eigene Auswertung stattfindet oder umgekehrt mindestens eine der Kameras 10a-b die Funktionalität der Sicherheitssteuerung integriert. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit), eine VPU (Video Processing Unit) oder dergleichen. Eine externe Recheneinheit kann neben der schon erwähnten Sicherheitssteuerung 36 ein Computer beliebiger Bauart einschließlich Notebooks, Smartphones oder Tablets ebenso sein wie ein lokales Netzwerk, ein Edge-Device oder eine Cloud.

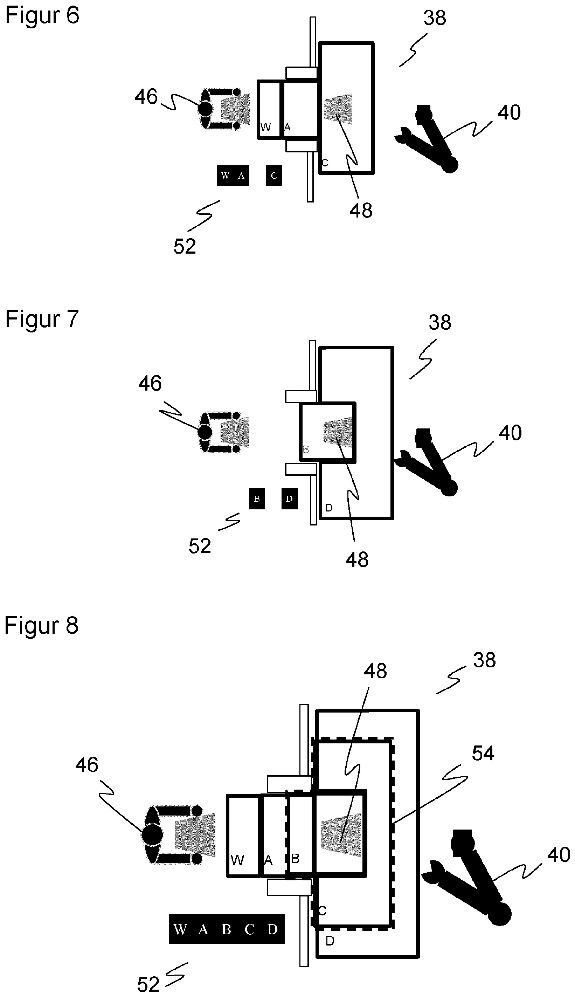

Die Figuren 3 und 4 zeigen eine schematische Darstellung einer beispielhaften Konfiguration von Schutzfeldern 38 zur Absicherung einer stellvertretend als Roboter dargestellten Maschine 40 der ersten Kamera 10a beziehungsweise der zweiten Kamera 10b. Die Figur 5 ist eine zugehörige kombinierte Ansicht der überlagerten Schutzfeldkonfiguration beider Kameras 10a-b. Die Figuren 6 und 7 zeigen die einzelnen Schutzfeldkonfigurationen der Figuren 3 und 4 nochmals alternativ aus der Draufsicht, entsprechend die Figur 8 die kombinierte Schutzfeldkonfiguration der Figur 5 aus der Draufsicht.

Die Schutzfelder 38 sind in den Figuren 3 bis 5 im Schnitt dargestellt und haben eine zusätzliche Tiefenerstreckung, die aus der Draufsicht der Figuren 6 bis 8 ersichtlich ist. Es handelt sich also um räumliche, dreidimensionale Schutzfelder. Die Maschine 40 befindet sich in einem für Personen unzugänglichen, mechanisch abgesicherten Arbeitsbereich 42, beispielsweise in einer Roboterzelle. Über einen durch die Schutzfelder 38 abgesicherten Zugangsbereich 44 kann ein nur in den Figuren 6 bis 8 dargestellter Werker 46 zu einem Kooperationsbereich 48 gelangen, um dort beispielsweise ein Werkstück oder Material der Maschine 40 zuzuführen oder von ihr entgegenzunehmen.

Die erste Kamera 10a überwacht drei Schutzfelder W, A, C, die in einer Verbindungsrichtung zwischen der Maschine 40 und dem sich nähernden Werker 46 aneinandergereiht sind. Das Schutzfeld W kann lediglich ein Warnfeld sein, das also wie ein Schutzfeld Objekteingriffe erkennt und entsprechende Reaktionen ermöglicht, aber im Gegensatz zu einem Schutzfeld keine eigentliche Sicherheitsfunktion hat. Im dargestellten Beispiel kann der Roboter physisch das Warnfeld W gar nicht erreichen, so dass hier keine Schutzfunktion erforderlich ist. Entsprechend überwacht die zweite Kamera 10b zwei aufeinanderfolgende Schutzfelder B und D. Die Geometrie der Schutzfelder 38 ist etwas komplexer, um sich den örtlichen Gegebenheiten anzupassen, beispielsweise mit einer Aussparung 50 in der Umgebung des Kooperationsbereichs 48. In der kombinierten Schutzfeldüberwachung beider Kameras 10a-b entsteht eine gemeinsame Schutzfeldsequenz W, A, B, C, D. Diese Sequenz und der Beitrag der einzelnen Kameras 10a-b kann in einer nur zur Erläuterung hinzugefügten symbolischen Übersicht 52 der Figuren 6 bis 8 nochmals nachvollzogen werden.

Die Schutzfelder W, A, B, C, D sind simultan aktiv. Dabei gibt es Bereiche, in denen Schutzfelder einander überlagern und in denen daher ein höheres Sicherheitsniveau erreicht werden kann. Ein solcher Bereich ist in Figur 8 durch eine gestrichelte Linie 54 gekennzeichnet. Beispielsweise wird durch Überlagerung mit zwei Kameras 10a-b des Sicherheitsniveaus PLc eine Schutzfeldüberwachung mit dem Sicherheitsniveau PLd realisiert. Die Schutzfelder bilden eine erste, werkerseitige Sequenz und eine zweite maschinenseitige Sequenz. Bei Annäherung des Werkers 46 wird eine Abfolge WABCD erwartet, umgekehrt bei Annäherung der Maschine 40 eine Abfolge DCBAW, wobei vorzugsweise ein jeweiliges Übergreifen über den Kooperationsbereich 48 hinaus nicht zulässig ist und beispielsweise die Maschine 40 das Schutzfeld W gar nicht erreichen könnte. Solche Bedingungen an die Kombination der vorliegenden Schutzfeldeingriffe, die sogleich noch verfeinert werden, überprüft die Sicherheitssteuerung 36. Sie lässt die Maschine 40 unvermindert weiterarbeiten, solange die Kombination der Schutzfeldeingriffe ganz unkritisch ist, gibt in etwas kritischeren Situationen Anweisungen an eine Maschinensteuerung der Maschine 40, um durch Verbote gewisser Bewegungen oder Rückzug der Maschine 40 einer wirklichen Gefährdungssituation zuvorzukommen, oder löst erforderlichenfalls eine Absicherung der Maschine 40 aus.

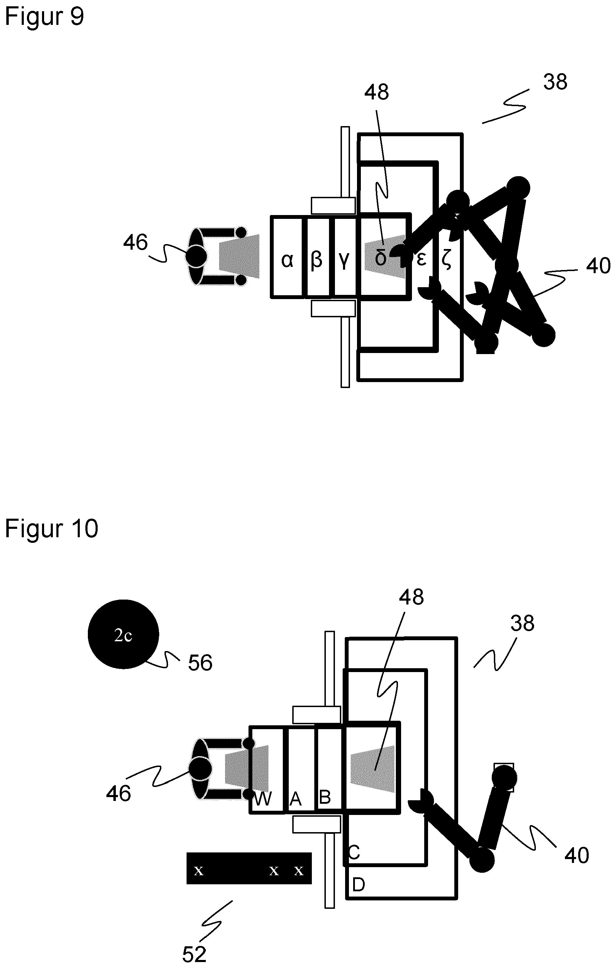

Figur 9 zeigt eine Darstellung ähnlich Figur 8, in der die von den Kameras 10a-b tatsächlich überwachten Schutzfelder 38 durch gemeinsame Auswertung zu feiner definierten funktionalen Schutzfeldern kombiniert werden. Ein funktionales Schutzfeld kann genauso aufgefasst werden wie ein Schutzfeld, lediglich dessen Auswertung auf Schutzfeldeingriffe ist möglicherweise erst in Kombination beider Kameras 10a-b durch Überlappungs- ("UND") beziehungsweise Exklusivitätsbedingungen ("OHNE") möglich, wobei solche Bedingungen auch verkettet werden können. Nach diesem Prinzip können die sechs funktionalen Schutzfelder der Figur 9 oder noch mehr funktionale Schutzfelder erzeugt werden. Für die Erfindung wird abgesehen davon, dass durch funktionale Schutzfelder die Höchstanzahl simultan überwachbarer Schutzfelder der Kameras 10a-b über deren eigentliche Spezifikation hinaus ermöglicht wird, kein weiterer Unterschied zwischen Schutzfeldern und funktionalen Schutzfeldern gemacht. Im Gegenteil genügen für die nun folgenden Betrachtungen bereits die ursprünglichen Schutzfeldeingriffe WABCD. Konkret zeigt Figur 9 beispielhaft ein erstes funktionales Schutzfeld α entsprechend dem Schutzfeld W, ein zweites funktionales Schutzfeld β entsprechend dem Schutzfeld A OHNE B, ein drittes funktionales Schutzfeld γ entsprechend dem Schutzfeld B OHNE C, ein viertes funktionales Schutzfeld δ mit dem Kooperationsbereich 48 als Überlappungsbereich der Schutzfelder B UND C, ein fünftes funktionales Schutzfeld ε entsprechend dem Schutzfeld C OHNE B und ein sechstes funktionales Schutzfeld ζ entsprechend dem Schutzfeld D OHNE C.

Während in Figur 8 in offensichtlich unkritischer Weise weder die Maschine 40 noch der Werker in irgendein Schutzfeld 38 eingreifen, zeigen die Figuren 10 bis 12 eine Annäherungsbewegung des Werkers 46, in der beispielhaft die Maschine 40 von ihrer Seite her schon jeweils in die Schutzfelder C und D eingreift. In der Situation der Figur 10 hat der Werker 46 vorerst nur in das äußerste Schutzfeld W eingegriffen. Da die Maschine 40 auf ihrer Seite noch einen Abstand zum Kooperationsbereich 48 einhält, sind im inneren Teil der gemeinsamen Sequenz, die sich von beiden Seiten her aus der werkerseitigen und der maschinenseitigen Sequenz zusammensetzt, die Schutzfelder A und B noch frei. Das ist auch noch einmal in der symbolischen Übersicht 52 veranschaulicht, in der ein "x" einen Schutzfeldeingriff markiert.

Eine Mindestanzahl von zwei freien Schutzfeldern zwischen Maschine 40 und Werker 46 wird als unkritisch angesehen, die Maschine 40 kann mit unverminderter Geschwindigkeit weiterarbeiten. Allerdings erhält die Maschinensteuerung vorzugsweise die Anweisung, das Schutzfeld B freizulassen, sich also nicht weiter anzunähern, oder sogar sich vorsorglich aus dem Schutzfeld C zurückzuziehen, in Vorbereitung einer erwarteten fortgesetzten Annäherung des Werkers 46. Die Maschinensteuerung selbst ist vorzugsweise nicht sicher, da eine sichere Maschinensteuerung hohen Aufwand bedeutet und jedenfalls in einer Sicherheitsanwendung nicht einfach vorausgesetzt werden sollte. Es besteht also durchaus die Möglichkeit, dass die Maschine 40 doch in das Schutzfeld B eingreift oder das Schutzfeld C entgegen einer etwaig erfolgten Anweisung nicht freigibt. Das wiederum sieht dann die Sicherheitssteuerung 36 als unzulässig an, da sie den Aufenthalt in dem betroffenen Schutzfeld verboten hatte, und kann entsprechend mit weiteren Anweisungen an die Maschine 40 oder erforderlichenfalls einer Absicherung der Maschine 40 reagieren.

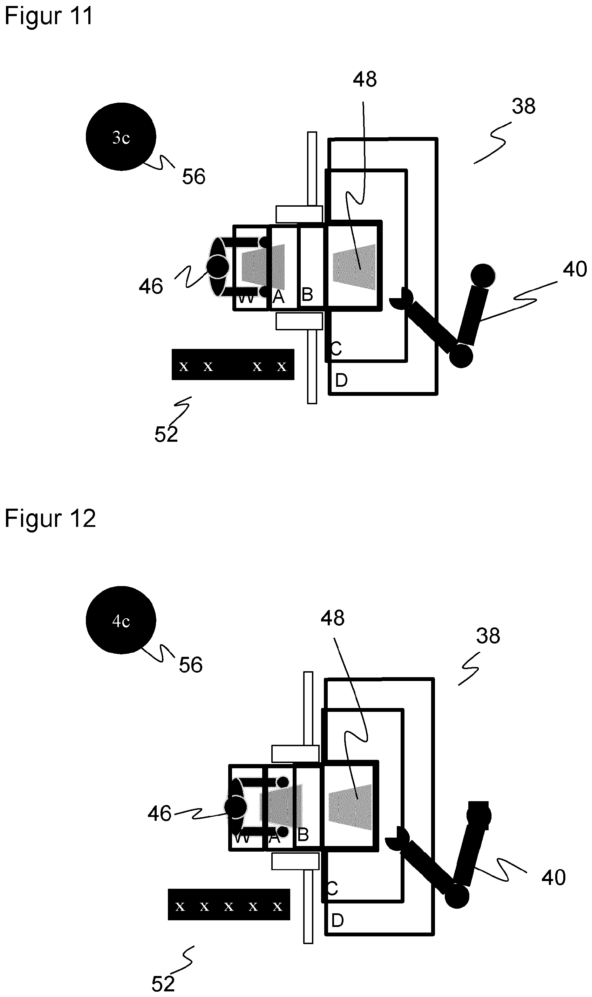

In der Situation der Figur 11 hat sich der Werker 46 weiter angenähert und dabei auch in das Schutzfeld A eingegriffen. Die Maschine hat sich nicht bewegt, es sei angenommen, dass sie keine entsprechende Anweisung bekommen hat, das Schutzfeld C schon vorsorglich freizugeben. Der Puffer an freien Schutzfeldern zwischen Maschine 40 und Werker 46 ist auf nur ein einziges Schutzfeld B zusammengeschrumpft. Diese Mindestanzahl eins an freien Schutzfeldern bedeutet noch keine eigentliche Gefahr, da Maschine 40 und Werker 46 weiterhin nicht in Kontakt kommen können und eindeutig ist, dass sich beide noch getrennt voneinander auf ihrer jeweiligen Seite befinden. Allerdings kann es nun sehr schnell zu einer kritischen Situation kommen. Daher erhält der Werker 46 eine Warnung, beispielsweise in Form eines nun gelb und nicht mehr wie zuvor grün leuchtenden Lichts. Die Maschine erhält die Anweisung, sich aus dem Schutzfeld C zurückzuziehen. Die Warnung an den Werker 46 soll ihn dazu anhalten, der Maschine 40 die für den Rückzug erforderliche Zeit zu geben.

In der Situation der Figur 12 hat sich der Werker 46 noch weiter angenähert und greift nun auch in das Schutzfeld B ein. Die Maschine 40 hat das Schutzfeld C aber noch nicht freigegeben, sei es, weil der Werker 46 zu schnell herangetreten ist oder weil die Maschinensteuerung der Anweisung nicht gefolgt ist. Deshalb liegt nun ein Eingriff in alle Schutzfelder vor, es gibt keinen Puffer freier Schutzfelder zwischen Maschine 40 und Werker 46 mehr. Zwar ist das in der gezeigten Situation der Figur 12 noch gar nicht gefährlich. Die Sicherheitssteuerung 36 kann das aber nicht mehr unterscheiden, wegen des fehlenden Puffers an freien Schutzfeldern befinden sich in ihrer groben, durch die Schutzfelder gegebenen Ortsauflösung Maschine 40 und Werker 46 zumindest potentiell am selben Ort. Die Maschine 40 wird also abgesichert.

Die Maschine 40 kann sich nun möglicherweise in einem für Personen ungefährlichen Schleichmodus aus dem Schutzfeld C und dann auch dem Schutzfeld D zurückziehen. Ebenso kann der Werker 46 zurückweichen, sei es sofort oder nachdem seine Arbeitsschritte im Kooperationsbereich 48 beendet sind. So kann wieder ein Puffer einer Mindestanzahl von zwei freien Schutzfeldern zwischen Maschine 40 und Werker 46 hergestellt werden. In dieser Situation, oder vorsichtshalber erst dann, wenn ein noch größerer Puffer entstanden ist oder gar kein Schutzfeldeingriff mehr vorliegt, kann die Maschine 40 wiederanlaufen. Dies geschieht manuell beispielsweise durch Betätigen eines Tasters, den der Werker 46 nur außen erreichen kann und nachdem er sich versichert hat, dass der Arbeitsbereich 42 frei ist. Vorzugsweise ist ein automatischer Wiederanlauf ohne Taster oder dergleichen möglich, sobald die genannte Bedingung an den Puffer wieder erfüllt ist. Je nach geometrischen Gegebenheiten und konkreter Schutzfeldgeometrie und -anordnung ist dafür möglicherweise ein zusätzlicher Hintertretschutz etwa mittels Radar oder einer weiteren Kamera erforderlich. Das soll verhindern, dass sich der Werker 46 oder eine weitere Person in den Arbeitsbereich 42 begibt, während ohnehin noch alle Schutzfelder verletzt sind und die Überwachungsvorrichtung deshalb gegen dieses Hintertreten effektiv blind ist.

Die angegebenen Mindestanzahlen für Puffer freier Schutzfelder sind besonders vorteilhaft, aber es kann davon auch abgewichen werden, also eine höhere Mindestanzahl gefordert werden, insbesondere dann, wenn längere Sequenzen aus mehr Schutzfeldern gebildet sind, um beispielsweise sehr feinkörnige Sequenzen zu bilden.

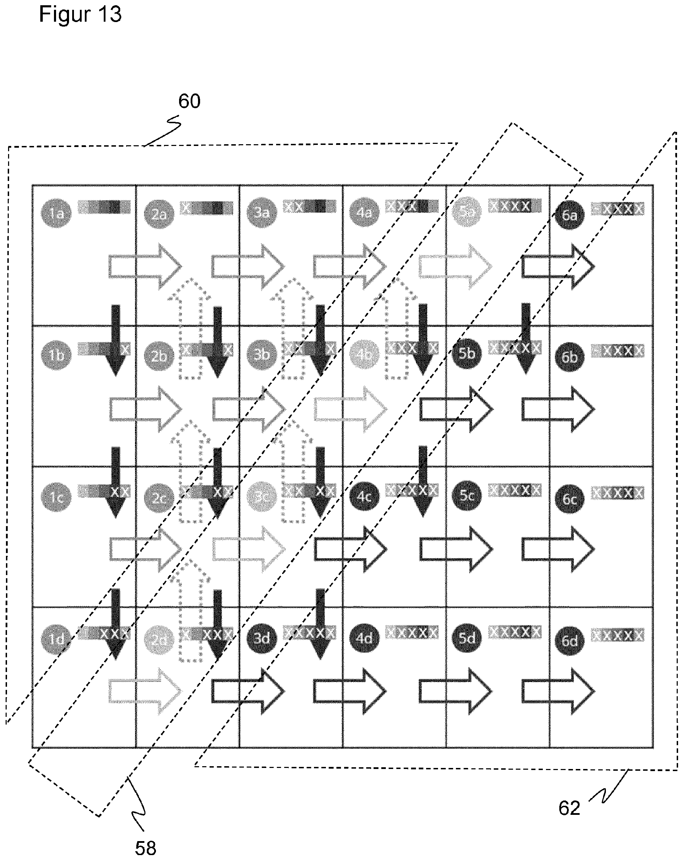

Figur 13 zeigt eine Übersichtsdarstellung eines Zustandsautomaten, mit dem den möglichen Kombinationen von Schutzfeldeingriffen die passende Maßnahme zugeordnet werden kann, aus dem drei Zustände in den Figuren 10 bis 12 exemplarisch illustriert werden. Die Zustände sind in den Spalten von 1 bis 6 mit zunehmender Annäherung des Werkers 46 und in den Zeilen mit zunehmender Annäherung der Maschine 40 an den Kooperationsbereich 48 geordnet. Dadurch ergeben sich mögliche Zustände 1a...6a, 1b, ...6d. Drei dieser Zustände, nämlich 2c, 3c und 4c, wurden bereits beispielhaft anhand der Figuren 10 und 12 erläutert, und sie sind entsprechend mit einem Symbol 56 gekennzeichnet.

In den tabellarisch gezeigten Zuständen sind jeweils oben rechts die Schutzfelder mit "x" gekennzeichnet, in die eingegriffen ist. Es können drei Bereiche der Zustände unterschieden werden, nämlich eine Nebendiagonale 58 aus den Zuständen 2d, 3c, 4b und 5a, ein erstes Dreieck 60 links oberhalb und ein zweites Dreieck 62 rechts unterhalb davon. In den Zuständen innerhalb des ersten Dreiecks 60 gibt es mindestens zwei freie Schutzfelder zwischen Maschine 40 und Werker 46, so dass die Maschine 40 unvermindert weiterarbeiten kann. Das wurde zu Figur 10 beschrieben. In den Zuständen auf der Nebendiagonalen 58 gibt es nur noch ein freies Schutzfeld als Puffer zwischen Maschine 40 und Werker 46, so dass der Werker 46 eine Warnung erhält, damit die Maschine 40 sich zurückziehen kann, wie zu Figur 11 beschrieben. In den Zuständen in dem zweiten Dreieck 62 gibt es gar keinen Puffer zwischen Maschine 40 und Werker 46, und deshalb wird die Maschine wie zu Figur 12 erläutert abgesichert.

Damit ist die wichtigste Maßnahme zu den Zuständen schon genannt, nämlich ob abgesichert werden muss wie innerhalb des zweiten Dreiecks 62, gewarnt werden sollte wie auf der Nebendiagonalen 58 oder die Maschine 40 weiterarbeiten kann wie innerhalb des ersten Dreiecks 60. Die vertikalen Pfeile in Figur 13 symbolisieren weitere mögliche Maßnahmen. Pfeile nach unten stehen für eine der Maschine 40 erlaubte und abgesicherte Annäherung an den Kooperationsbereich 48. Gestrichelte Pfeile nach oben bedeuten die erläuterte vorzugsweise Rückzugsbewegung der Maschine 40 bei Annäherung des Werkers 46. Der Rückzug der Maschine 40 beziehungsweise ein entsprechendes Betretungsverbot betrifft jeweils ein Schutzfeld, das dem Schutzfeld zugeordnet ist, das der Werker 46 neu betritt. Dabei geht es darum, den Puffer von zwei freien Schutzfeldern wiederherzustellen oder den Puffer vorbereitend gegen weitere Annäherung des Werkers 46 zu erweitern. Die horizontalen Pfeile symbolisieren keine Maßnahmen, sondern Handlungen des Werkers 46, nämlich dessen Annäherungsbewegung. Wie schon erwähnt, sind Annäherungsbewegungen des Werkers 46 für Zustände innerhalb des ersten Dreiecks 60 unkritisch. Bei Zuständen der Nebendiagonalen 58 könnte eine weitere Annäherung eine Absicherung auslösen, für Zustände in dem zweiten Dreieck 62 wird die Absicherung ausgelöst.

## Patentansprüche

1. Verfahren zur berührungslosen Absicherung an einem Kooperationsbereich (48) einer Maschine (40), den ein Werker (46) und die Maschine (40) gemeinsam nutzen, wobei auf einer ersten Seite des Kooperationsbereichs (48) ein Zugangsbereich (44) für den Werker (46) und auf einer von der ersten Seite verschiedenen zweiten Seite ein Arbeitsbereich (42) der Maschine (40) angeordnet sind, wobei mehrere im Umfeld des Kooperationsbereichs (48) konfigurierte Schutzfelder (38) von mindestens einem optoelektronischen Sensor (10) auf Schutzfeldeingriffe überwacht werden und mindestens zwei der Schutzfelder (38) von der ersten Seite her in einer ersten Sequenz angeordnet sind, so dass ein Werker (46) in diese Schutzfelder (38) beim Herannahen an den Kooperationsbereich (48) nacheinander eingreift, und wobei die Schutzfeldeingriffe ausgewertet werden, um die Maschine (40) im Falle einer unzulässigen Kombination von Schutzfeldeingriffen abzusichern,
**dadurch gekennzeichnet,**
**dass** es zulässige und unzulässige Kombinationen von Schutzfeldeingriffen gibt und die Maschine (40) nur im Falle einer unzulässigen Kombination abgesichert wird, dass mindestens zwei der Schutzfelder (38) von der zweiten Seite her in einer zweiten Sequenz angeordnet sind, so dass die Maschine (40) in diese Schutzfelder (38) beim Herannahen an den Kooperationsbereich (48) nacheinander eingreift und dass die Auswertung auf zulässige und unzulässige Kombinationen von Schutzfeldeingriffen die zweite Sequenz einschließt, wobei als zulässige Kombination von Schutzfeldeingriffen angesehen wird, wenn in Schutzfelder (38) der ersten Sequenz und/oder der zweiten Sequenz nacheinander von außen nach innen eingegriffen wird, wobei innen den Kooperationsbereich (48) bezeichnet, dabei aber zwischen Schutzfeldern (38) der beiden Sequenzen eine Mindestanzahl Schutzfelder (38) ohne Schutzfeldeingriff verbleibt.

2. Verfahren nach Anspruch 1,
wobei der optoelektronische Sensor (10) ein 3D-Sensor oder eine Lichtlaufzeitkamera ist, und wobei die Schutzfelder (38) dreidimensionale Schutzfelder sind.

3. Verfahren nach Anspruch 1 oder 2,
wobei mindestens zwei optoelektronische Sensoren (10a-b) jeweils einen Teil der Schutzfelder (38) überwachen, und wobei mindestens ein Schutzfeld (38) von beiden optoelektronischen Sensoren (10a-b) überwacht wird.

4. Verfahren nach Anspruch 3,
wobei ein Schutzfeld (38) den Kooperationsbereich (48) umfasst und dieses Schutzfeld (38) von beiden optoelektronischen Sensoren (10a-b) überwacht wird.

5. Verfahren nach einem der vorhergehenden Ansprüche,
wobei, wenn in ein Schutzfeld (38) der ersten Sequenz eingegriffen wird, die Maschine (40) in ein dem Schutzfeld (38) der ersten Sequenz entsprechend der Mindestanzahl zugeordnetes Schutzfeld (38) nicht mehr eingreifen darf und die Maschine (40) sich, sofern sie bereits in das zugeordnete Schutzfeld (38) eingreift, daraus zurückzieht.

6. Verfahren nach einem der vorhergehenden Ansprüche,
wobei bei Einhaltung einer Mindestanzahl zwei die Maschine (40) ohne Beschränkung ihrer Arbeitsgeschwindigkeit weiterarbeitet.

7. Verfahren nach einem der vorhergehenden Ansprüche,
wobei bei Einhaltung lediglich einer Mindestanzahl eins der Werker (46) eine Warnung erhält, sich dem Kooperationsbereich (48) nicht weiter anzunähern.

8. Verfahren nach einem der vorhergehenden Ansprüche,
wobei die Maschine (40) abgesichert wird, wenn eine Mindestanzahl nicht eingehalten wird, wobei Absichern ein Verlangsamen der Maschine (40), ein Zurückweichen, ein sofortiges Anhalten oder ein Verbringen in einen sicheren Zustand bedeutet.

9. Verfahren nach einem der vorhergehenden Ansprüche,
wobei die Maschine (40) automatisch wieder anläuft, sobald die Mindestanzahl wiederhergestellt ist oder in kein Schutzfeld (38) mehr eingegriffen wird.

10. Verfahren nach einem der vorhergehenden Ansprüche,
wobei für die Auswertung der Schutzfeldeingriffe und der deshalb hinsichtlich der Maschine (40) zu treffenden Maßnahmen ein Zustandsautomat eingesetzt wird, dessen Übergänge durch einen zusätzlichen Eingriff in ein Schutzfeld (38) einer Sequenz oder das Beenden eines Eingriffs in ein Schutzfeld (38) einer Sequenz bestimmt sind, wobei die Maßnahmen ein Wegbewegen der Maschine (40) weg von dem Kooperationsbereich (48) in die zweite Richtung, ein Verbot von Eingriffen in ein Schutzfeld (38) durch die Maschine (40) und/oder das Aufheben eines Verbots von Eingriffen in ein Schutzfeld (38) sind.

11. Verfahren nach einem der vorhergehenden Ansprüche,
wobei die erste Sequenz von außen nach innen zum Kooperationsbereich (48) ein erstes Schutzfeld α, ein zweites Schutzfeld β und ein drittes Schutzfeld γ umfasst, der Kooperationsbereich (48) durch ein viertes Schutzfeld δ überwacht wird und die zweite Sequenz von innen nach außen ausgehend von dem Kooperationsbereich (48) ein fünftes Schutzfeld ε und ein sechstes Schutzfeld ζ umfasst.

12. Verfahren nach einem der vorhergehenden Ansprüche,
wobei zwei optoelektronische Sensoren (10a-b) fünf Schutzfelder W, A, B, C, D überwachen, nämlich der eine optoelektronische Sensor (10a) im Zugangsbereich (44) ein äußeres erstes Schutzfeld W, ein den Bereich zwischen dem ersten Schutzfeld W und dem Kooperationsbereich (48) schließendes zweites Schutzfeld A und ein sich daran in dem Arbeitsbereich (42) anschließendes, den Kooperationsbereich (48) umfassendes viertes Schutzfeld C und der andere optoelektronische Sensor (10b) im Arbeitsbereich (42) ein äußeres fünftes Schutzfeld D und ein sich daran anschließendes, den Kooperationsbereich (48) umfassendes und in den Zugangsbereich (44) hineinragendes drittes Schutzfeld B.

13. Verfahren nach Anspruch 12,
wobei die Überwachungen der beiden Sensoren (10a-b) einander zumindest im vierten Schutzfeld C überlappen.

14. Verfahren nach Anspruch 12 oder 13,
wobei das erste Schutzfeld W als funktionales erstes Schutzfeld α, das zweite Schutzfeld A ohne das dritte Schutzfeld B als zweites funktionales Schutzfeld β, das dritte Schutzfeld B ohne das vierte Schutzfeld C als funktionales drittes Schutzfeld γ, ein Überlappungsbereich des dritten Schutzfeldes B mit dem vierten Schutzfeld C als funktionales viertes Schutzfeld δ, das vierte Schutzfeld C ohne das dritte Schutzfeld B als funktionales fünftes Schutzfeld ε und das fünfte Schutzfeld D ohne das vierte Schutzfeld C als sechstes Schutzfeld ζ überwacht wird.

15. Überwachungsvorrichtung zur berührungslosen Absicherung an einem Kooperationsbereich (48) einer Maschine (40), den ein Werker (46) und die Maschine (40) gemeinsam nutzen, wobei auf einer ersten Seite des Kooperationsbereichs (48) ein Zugangsbereich (44) für einen Werker (46) und auf einer von der ersten Seite verschiedenen zweiten Seite ein Arbeitsbereich (42) der Maschine (40) angeordnet sind und wobei die Überwachungsvorrichtung mindestens einen sicheren optoelektronischen Sensor (10) mit einem Lichtempfänger (26) zur Erzeugung eines Empfangssignals und eine Steuer- und Auswertungseinheit (28, 36) aufweist, die dafür ausgebildet ist, anhand des Empfangssignals mehrere im Umfeld des Kooperationsbereichs (48) konfigurierte Schutzfelder (38) auf Schutzfeldeingriffe zu überwachen, wobei die Schutzfelder (38) derart konfiguriert sind, dass mindestens zwei der Schutzfelder (38) von der ersten Seite her in einer ersten Sequenz angeordnet sind, so dass ein Werker (46) in diese Schutzfelder (38) beim Herannahen an den Kooperationsbereich (48) nacheinander eingreift, und wobei die Steuer- und Auswertungseinheit (28, 36) dafür ausgebildet ist, die Schutzfeldeingriffe auszuwerten, um die Maschine (40) im Falle einer unzulässigen Kombination von Schutzfeldeingriffen abzusichern, **dadurch gekennzeichnet,**
**dass** es zulässige und unzulässige Kombinationen von Schutzfeldeingriffen gibt und die Steuer- und Auswertungseinheit (28, 36) die Maschine (40) nur im Falle einer unzulässigen Kombination absichert, dass die Schutzfelder (38) derart konfiguriert sind, dass mindestens zwei der Schutzfelder (38) von der zweiten Seite her in einer zweiten Sequenz angeordnet sind, so dass die Maschine (40) in diese Schutzfelder (38) beim Herannahen an den Kooperationsbereich (48) nacheinander eingreift und dass die Auswertung der Steuer- und Auswertungseinheit (28, 36) auf zulässige und unzulässige Kombinationen von Schutzfeldeingriffen die zweite Sequenz einschließt, wobei als zulässige Kombination von Schutzfeldeingriffen angesehen wird, wenn in Schutzfelder (38) der ersten Sequenz und/oder der zweiten Sequenz nacheinander von außen nach innen eingegriffen wird, wobei innen den Kooperationsbereich (48) bezeichnet, dabei aber zwischen Schutzfeldern (38) der beiden Sequenzen eine Mindestanzahl Schutzfelder (38) ohne Schutzfeldeingriff verbleibt.

## Claims

1. A method for contactless safeguarding at a cooperation zone (48) of a machine (40) that a worker 46) and the machine (40) use in common, wherein an access zone (44) for the worker (46) is arranged at a first side of the cooperation zone (48) and a working zone (42) of the machine (40) is arranged at a second side different from the first side, wherein a plurality of protected fields (38) configured in the environment of the cooperation zone (48) are monitored for protected field intrusions by at least one optoelectronic sensor (10) and at least two of the protected fields (38) are arranged in a first sequence starting from the first side such that a worker (46) sequentially intrudes into these protected fields (38) when approaching the cooperation zone (48), and wherein the protected field intrusions are evaluated to safeguard the machine (40) in the case of an unpermitted combination of protected field intrusions,
**characterized in that**
there are permitted and unpermitted combinations of protected field intrusions and the machine (40) is only secured in the case of an unpermitted combination; **in that** at least two of the protected fields (38) are arranged in a second sequence starting from the second side such that the machine (40) sequentially intrudes in these protected fields (38) when approaching the cooperation zone (48); and **in that** the evaluation for permitted and unpermitted combinations of protected field intrusions includes the second sequence, with it being considered a permitted combination of protected field intrusions when an intrusion takes place sequentially from the outside to the inside in protected fields (38) of the first sequence and/or of the second sequence, and with inward designating the cooperation zone (48), but in this respect a minimum number of protected fields (38) without a protected field intrusion remaining between protected fields (38) of the two sequences.

2. A method in accordance with claim 1,
wherein the optoelectronic sensor (10) is a 3D sensor, in particular a time of flight camera; and wherein the protected fields (38) are three-dimensional protected fields.

3. A method in accordance with claim 1 or claim 2,
wherein at least two optoelectronic sensor (10a-b) each monitor some of the protected fields (38); and wherein at least one protected field (38) is monitored by both optoelectronic sensors (10a-b).

4. A method in accordance with claim 3,
wherein a protected field (38) comprises the cooperation zone (48) and this protected field (38) is monitored by both optoelectronic sensors (10a-b).

5. A method in accordance with any one of the preceding claims,
wherein when a protected field (38) of the first sequence is infringed, the machine may no longer intrude into a protected field (38) associated with the protected field (38) of the first sequence corresponding to the minimum number and the machine (40) withdraws from the associated protected field (38) if it already intrudes therein.

6. A method in accordance with any one of the preceding claims,
wherein the machine (40) continues to work without any restriction of its work speed on observing a minimum number of two.

7. A method in accordance with any one of the preceding claims ,
wherein the worker (46) receives a warning not to further approach the cooperation zone (48) on observing only a minimum number of one.

8. A method in accordance with any one of the preceding claims,
wherein the machine (40) is safeguarded when a minimum number has not been observed, with safeguarding meaning a slowing down of the machine (40), a rearward evasion, an immediate stop, or a change into a safe state.

9. A method in accordance with any one of the preceding claims,
wherein the machine (40) restarts automatically as soon as the minimum number has been reestablished or a protected field (38) is no longer infringed.

10. A method in accordance with any one of the preceding claims,
wherein, for the evaluation of the protected field intrusions and the measures therefore to be taken with respect to the machine (40), a finite state machine is used whose transitions are determined by an additional intrusion into a protected field (38) of a sequence or the ending of an intrusion into the protected field (38) of a sequence is determined; and wherein the measures are a moving of the machine (40) away from the cooperation zone (48) in the second direction, a prohibition of intrusions into a protected field (38) by the machine (40), and/or the canceling of a prohibition of intrusions into a protected field (38).

11. A method in accordance with any one of the preceding claims,
wherein the first sequence comprises, from the outside to the inside with respect to the cooperation zone (48), a first protected field α, a second protected field β, and a third protected field γ , the cooperation zone (48) is monitored by a fourth protected field δ and the second sequence, starting from the inside to the outside of the cooperation zone (48), comprises a fifth protected field ε and a sixth protected field ζ.

12. A method in accordance with any one of the preceding claims,
wherein two optoelectronic sensors (10a-b) monitor five protected fields W, A, B, C, D, namely the one optoelectronic sensor (10a) in the access zone (44) monitors an outer first protected field W, a second protected field A enclosing the zone between the first protected field W and the cooperation zone (48), and a fourth protected field C adjoining in the working zone (42) and comprising the cooperation zone (48) and the other optoelectronic sensor (10b) in the working zone (42) monitors an outer fifth protected field D and an adjoining third protected field B comprising the cooperation zone (48) and projecting into the access zone (44).

13. A method in accordance with claim 12,
wherein the monitoring processes of the two sensors (10a-b) overlap one another at least in the fourth protected field C.

14. A method in accordance with claim 12 or claim 13,
wherein the first protected field W is monitored as a functional first protected field α, the second protected field A without the third protected field B as a second functional protected field β, the third protected field B without the fourth protected field C as a functional third protected field γ, an overlap zone of the third protected field B with the fourth protected field C as a functional fourth protected field δ, the fourth protected field C without the third protected field B as a functional fifth protected field ε, and the fifth protected field D without the fourth protected field C as a sixth protected field ζ.

15. A monitoring device for contactless safeguarding at a cooperation zone (48) of a machine (40) that a worker (46) and the machine (40) use in common, wherein an access zone (44) for a worker (46) is arranged at a first side of the cooperation zone (48) and a working zone (42) of the machine (40) is arranged at a second side different from the first side, and wherein the monitoring device has at least one safe optoelectronic sensor (10) having a light receiver (26) for generating a received signal and has a control and evaluation unit (28, 36) that is configured to monitor a plurality of protected fields (38) configured in the environment of the cooperation zone (48) for protected field intrusions with reference to the received signal, wherein the protected fields (38) are configured such that at least two of the protected fields (38) are arranged in a first sequence starting from the first side such that a worker (46) sequentially intrudes into these protected fields (38) when approaching the cooperation zone (48), and wherein the control and evaluation unit (28, 36) is configured to evaluate the protected field intrusions to safeguard the machine (40) in the case of an unpermitted combination of protected field intrusions,
**characterized in that**
there are permitted and unpermitted combinations of protected field intrusions and the control and evaluation unit (28, 36) only safeguards the machine (40) in the case of an unpermitted combination; **in that** the protected fields are configured such that at least two of the protected fields (38) are arranged in a second sequence starting from the second side such that the machine (40) sequentially intrudes in these protected fields (38) when approaching the cooperation zone (48); and **in that** the evaluation of the control and evaluation unit (28, 36) for permitted and unpermitted combinations of protected field intrusions includes the second sequence, with it being considered a permitted combination of protected field intrusions when an intrusion takes place sequentially from the outside to the inside in protected fields (38) of the first sequence and/or of the second sequence, and with inward designating the cooperation zone (48), but in this respect a minimum number of protected fields (38) without a protected field intrusion remaining between protected fields (38) of the two sequences.

## Revendications

1. Procédé de sécurisation sans contact physique d'une zone de coopération (48) d'une machine (40), ladite zone étant utilisée conjointement par un ouvrier (46) et par la machine (40), une zone d'accès (44) pour l'ouvrier (46) étant disposée sur un premier côté de la zone de coopération (48), et une zone de travail (42) de la machine (40) étant disposée sur un deuxième côté différent du premier côté,
dans lequel plusieurs champs de protection (38) configurés dans l'environnement de la zone de coopération (48) sont surveillés par au moins un capteur optoélectronique (10) afin de détecter des interventions dans les champs de protection, et au moins deux des champs de protection (38) sont disposés selon une première séquence partant du premier côté, de sorte qu'un ouvrier (46) intervient successivement dans ces champs de protection (38) lorsqu'il s'approche de la zone de coopération (48), et les interventions dans les champs de protection sont évaluées pour sécuriser la machine (40) dans le cas d'une combinaison inadmissible d'interventions dans les champs de protection,
**caractérisé en ce que**
il existe des combinaisons admissibles et inadmissibles d'interventions dans les champs de protection, et la machine (40) n'est sécurisée qu'en cas de combinaison inadmissible,
**en ce qu'**au moins deux des champs de protection (38) sont disposés selon une deuxième séquence partant du deuxième côté, de sorte que la machine (40) intervient successivement dans ces champs de protection (38) lorsqu'elle s'approche de la zone de coopération (48), et
**en ce que** l'évaluation quant aux combinaisons admissibles et inadmissibles d'interventions dans les champs de protection inclut la deuxième séquence, sachant que l'on considère comme combinaison admissible d'interventions dans les champs de protection le fait d'intervenir successivement de l'extérieur vers l'intérieur dans les champs de protection (38) de la première séquence et/ou de la deuxième séquence, l'intérieur désignant la zone de coopération (48), tout en laissant subsister entre les champs de protection (38) des deux séquences un nombre minimum de champs de protection (38) sans intervention.

2. Procédé selon la revendication 1,
dans lequel le capteur optoélectronique (10) est un capteur 3D ou une caméra à temps de vol, et les champs de protection (38) sont des champs de protection tridimensionnels.

3. Procédé selon la revendication 1 ou 2,
dans lequel au moins deux capteurs optoélectroniques (10a-b) surveillent chacun une partie des champs de protection (38), et au moins un champ de protection (38) est surveillé par les deux capteurs optoélectroniques (10a-b).

4. Procédé selon la revendication 3,
dans lequel un champ de protection (38) comprend la zone de coopération (48) et ce champ de protection (38) est surveillé par les deux capteurs optoélectroniques (10a-b).

5. Procédé selon l'une des revendications précédentes,
dans lequel, lorsqu'il y a une intervention dans un champ de protection (38) de la première séquence, la machine (40) ne doit plus intervenir dans un champ de protection (38) associé au champ de protection (38) de la première séquence selon le nombre minimum , et la machine (40), si elle intervient déjà dans le champ de protection (38) associé, s'en retire.

6. Procédé selon l'une des revendications précédentes,
dans lequel, si un nombre minimum de deux est respecté, la machine (40) continue à travailler sans limitation de sa vitesse de travail.

7. Procédé selon l'une des revendications précédentes,
dans lequel, si un nombre minimum de un seulement est respecté, l'ouvrier (46) reçoit un avertissement pour ne pas s'approcher davantage de la zone de coopération (48).

8. Procédé selon l'une des revendications précédentes,
dans lequel la machine (40) est sécurisée si un nombre minimum n'est pas respecté, sachant que sécuriser signifie ralentir la machine (40), la reculer, l'arrêter immédiatement ou la mettre dans un état de sécurité.

9. Procédé selon l'une des revendications précédentes,
dans lequel la machine (40) redémarre automatiquement dès que le nombre minimum est rétabli ou qu'il n'y a plus d'intervention dans un champ de protection (38).

10. Procédé selon l'une des revendications précédentes,
dans lequel, pour évaluer les interventions dans le champ de protection et donc les mesures à prendre concernant la machine (40), on utilise un automate d'état dont les transitions sont déterminées par une intervention supplémentaire dans un champ de protection (38) d'une séquence ou par la fin d'une intervention dans un champ de protection (38) d'une séquence, les mesures à prendre consistant à éloigner la machine (40) de la zone de coopération (48) dans la deuxième direction, interdire des interventions dans un champ de protection (38) par la machine (40), et/ou lever une interdiction d'interventions dans un champ de protection (38).

11. Procédé selon l'une des revendications précédentes,
dans lequel la première séquence comprend, de l'extérieur vers l'intérieur en direction de la zone de coopération (48), un premier champ de protection α, un deuxième champ de protection β et un troisième champ de protection γ, la zone de coopération (48) est surveillée par un quatrième champ de protection δ, et la deuxième séquence comprend, de l'intérieur vers l'extérieur en partant de la zone de coopération (48), un cinquième champ de protection ε et un sixième champ de protection ζ.

12. Procédé selon l'une des revendications précédentes,
dans lequel deux capteurs optoélectroniques (10a-b) surveillent cinq champs de protection W, A, B, C, D, à savoir un capteur optoélectronique (10a) dans la zone d'accès (44) surveille un premier champ de protection extérieur W, un deuxième champ de protection A comblant la zone entre le premier champ de protection W et la zone de coopération (48), et un quatrième champ de protection C qui s'y raccorde dans la zone de travail (42) et qui englobe la zone de coopération (48), et l'autre capteur optoélectronique (10b) dans la zone de travail (42) surveille un cinquième champ de protection extérieur D et un troisième champ de protection B qui s'y raccorde, qui englobe la zone de coopération (48) et qui pénètre dans la zone d'accès (44).

13. Procédé selon la revendication 12,
dans lequel les surveillances des deux capteurs (10a-b) se chevauchent au moins dans le quatrième champ de protection C.

14. Procédé selon la revendication 12 ou 13,
dans lequel le premier champ de protection W est surveillé comme premier champ de protection fonctionnel α, le deuxième champ de protection A sans le troisième champ de protection B est surveillé comme deuxième champ de protection fonctionnel β, le troisième champ de protection B sans le quatrième champ de protection C est surveillé comme troisième champ de protection fonctionnel γ, une zone de chevauchement du troisième champ de protection B avec le quatrième champ de protection C est surveillée comme quatrième champ de protection fonctionnel δ, le quatrième champ de protection C sans le troisième champ de protection B est surveillé comme cinquième champ de protection fonctionnel ε, et le cinquième champ de protection D sans le quatrième champ de protection C est surveillé comme sixième champ de protection ζ.

15. Dispositif de surveillance pour la sécurisation sans contact physique d'une zone de coopération (48) d'une machine (40), ladite zone étant utilisée conjointement par un ouvrier (46) et par la machine (40), une zone d'accès (44) pour un ouvrier (46) étant disposée sur un premier côté de la zone de coopération (48), et une zone de travail (42) de la machine (40) étant disposée sur un deuxième côté différent du premier côté, et le dispositif de surveillance comprenant au moins un capteur optoélectronique sûr (10) présentant un récepteur de lumière (26) destiné à générer un signal de réception et une unité de commande et d'évaluation (28, 36) conçue pour surveiller, à l'aide du signal de réception, plusieurs champs de protection (38) configurés dans l'environnement de la zone de coopération (48) afin de détecter des interventions dans les champs de protection, les champs de protection (38) étant configurés de telle sorte qu'au moins deux des champs de protection (38) sont disposés selon une première séquence partant du premier côté, de sorte qu'un ouvrier (46) intervient successivement dans ces champs de protection (38) lorsqu'il s'approche de la zone de coopération (48), et l'unité de commande et d'évaluation (28, 36) étant conçue pour évaluer les interventions dans les champs de protection afin de sécuriser la machine (40) dans le cas d'une combinaison inadmissible d'interventions dans les champs de protection,
**caractérisé en ce que**
il existe des combinaisons admissibles et inadmissibles d'interventions dans les champs de protection, et l'unité de commande et d'évaluation (28, 36) ne sécurise la machine (40) qu'en cas de combinaison inadmissible,
**en ce que** les champs de protection (38) sont configurés de telle sorte qu'au moins deux des champs de protection (38) sont disposés selon une deuxième séquence partant du deuxième côté, de sorte que la machine (40) intervient successivement dans ces champs de protection (38) lorsqu'elle s'approche de la zone de coopération (48), et
**en ce que** l'évaluation par l'unité de commande et d'évaluation (28, 36) quant aux combinaisons admissibles et inadmissibles d'interventions dans les champs de protection inclut la deuxième séquence, sachant que l'on considère comme combinaison admissible d'interventions dans les champs de protection le fait d'intervenir successivement de l'extérieur vers l'intérieur dans les champs de protection (38) de la première séquence et/ou de la deuxième séquence, l'intérieur désignant la zone de coopération (48), tout en laissant subsister entre les champs de protection (38) des deux séquences un nombre minimum de champs de protection (38) sans intervention.
